# EUROPÄISCHE PATENTSCHRIFT

(11) **EP 0 348 346 B1**
(45) Veröffentlichungstag und Bekanntmachung des Hinweises auf die Patenterteilung: **17.08.1994**
(21) Anmeldenummer: 89810445.0
(22) Anmeldetag: 13.06.1989
(51) Int. Cl.: C09B 67/10, C09B 67/04, C09B 48/00

(54) **Verfahren zur Herstellung von opaken Chinacridonen**
Process for the manufacture of opaque quinacridones
Procédé de préparation de quinacridones opaques

(30) Priorität: 20.06.1988 US 209255
(43) Veröffentlichungstag der Anmeldung: 27.12.1989
(73) Patentinhaber: CIBA-GEIGY AG, 4002 Basel (CH)
(72) Erfinder: Jaffe, Edward E., Wilmington Delaware 19810 (US); Pfenninger, Johannes, Wilmington Delaware 19810 (US)

(56) Entgegenhaltungen:
- EP-A- 0 101 163
- EP-A- 0 221 853
- EP-A- 0 267 877
- EP-A- 0 305 328
- GB-A- 1 051 762
- US-A- 3 524 856

## Beschreibung

Chinacridone, wie z.B. verschiedenartig substituierte Chinacridone, z.B. Dihalogen- und Dialkylderivate, und ihre Pigmenteigenschaften sind seit langem bekannt und in zahlreichen Patenten und technischen Literaturstellen beschrieben. Dimethylderivate sind z.B. im US-Patent Nr. 3 264 298, Difluorderivate im US-Patent Nr. 3 793 327 und Dichlorderivate im US-Patent Nr. 4 015 998 beschrieben.

Es ist auch bekannt, dass Chinacridone nach ihrer Synthese (als Rohchinacridone bezeichnet) als Pigment im allgemeinen unbrauchbar sind und zur Entfaltung ihrer Pigmenteigenschaften, wie z.B. Partikelgrösse und -from, Kristallstruktur, Farbstärke und polymorphe Phase, noch nachbehandelt werden müssen. Ein oft angewandtes Verfahren involviert Mahlung des Rohchinacridons in Gegenwart von grossen Mengen eines anorganischen Salzes und anschliessende Extraktion des resultierenden Mahlpulvers.

Um die Verwendung eines Salzes bei der Mahlung von rohen Chinacridonen auszuschliessen wurden verschiedene Versuche durchgeführt, wie z.B. gemäss dem US-Patent Nr. 2 857 400, worin das Rohpigment in einer Kugelmühle vorgemahlen, dann in Aceton homogenisiert und anschliessend isoliert wird. Im US-Patent Nr. 3 017 414 wird das Rohpigment auch in einer Kugelmühle vorgemahlen, dann aber mit einer wasserunlöslichen organischen Flüssigkeit, wie Chlorbenzol in einer Wasseremulsion, behandelt und aus der Emulsion isoliert.

Eine weitere Methode zur Herstellung pigmentärer Chinacridone aus rohen Chinacridonen ist im US-Patent Nr. 3 287 147 beschrieben, wobei das Rohchinacridon entweder aus einer sauren Lösung (acid pasting) ausgefällt oder kugelgemahlen wird, und die resultierende, neutral eingestellte Paste zwischen 150 und 300°C unter Druck erhitzt wird. Eine spezielle Einrichtung für derartige Hitze- und Druckbehandlungen ist aber notwendig.

Das US-Patent Nr. 4 024 148 offenbart die Herstellung einer neuen Chinacridon-Kristallform durch Behandlung des ausgefällten Chinacridons in wässriger Suspension in Gegenwart einer grossen Menge einer wasserunlöslichen Flüssigkeit (enthaltend mindestens eine Hydroxylgruppe) und eines oberflächenaktiven Mittels. Das oberflächenaktive Mittel bleibt an der Pigmentoberfläche festgehalten. Gemäss einer weiteren Methode (US-Patent Nr. 4 094 699), wonach organische Lösungsmittel nicht verwendet werden, wird vorgemahlenes Chinacridon durch Behandlung mit einer wässrigen Base in Gegenwart von kationischen und anionischen oberflächenaktiven Mitteln zur Reife gebracht.

Da diese Verfahren meistens mehrere bei höheren Temperaturen und in saurem Medium durchgeführten Stufen involvieren, sind daher einfachere, ökonomischere und bei Raumtemperatur durchführbare Verfahrensalternativen erwünscht.

Das US-Patent Nr. 3 256 285 offenbart einen Prozess zur Verbesserung der Pigmenteingenschaften von disubstituierten Chinacridonen. Die Rohprodukte werden durch Ringschluss der entsprechenden 2,5-Diarylaminoterephthalsäuren, z.B. in Polyphosphorsäure, hergestellt. Die wässrigen Pasten dieser Rohprodukte werden dann mit Ethanol oder einem ähnlichen Lösungsmittel über 120°C gerührt, was hierfür eine geeignete Hochdruckeinrichtung erfordert. Die nach diesem Verfahren hergestellten Pigmente sind immer noch relativ transparent.

Oft ist es erwünscht, opake Versionen von substituierten Chinacridonen herzustellen. Opazität wird im allgemeinen als Verhältnis der einfallenden zur reflektierten Lichtintensität definiert. Bei Pigmenten steigt die Opazität mit zunehmender Lichtabsorption und Refraktionsindex, welche inhärente physikalische Eigenschaften sind. Optimale Opazität kann durch maximale Erhöhung der Lichtstreuung bei Anpassung der Partikelgrösse und der Partikelgrössenverteilung erreicht werden. Opazität ist erwünscht, um eine graue oder schwarze Unterlage zu überdecken.

Unsubstituierte Chinacridone der γ-Phase können in einer opaken Form ohne zusätzliche Konditionierungsstufen hergestellt werden. So führt die Oxidation vom β-6,13-Dihydrochinacridon (US-Patent Nr. 3 007 930) in wässrigem Methanol oder in einem ähnlichen Lösungsmittel bei einer relativ niedrigen Natriumhydroxid-Konzentration (US-Patent Nr. 2 969 366; Tabelle 1), vorzugsweise bei etwa 3 %, zu einem opaken γ-Chinacridon mit relativ breiter Partikelgrösse und einer spezifischen Oberfläche von 20-30 m²/g (US-Patent Nr. 2 844 581).

Bei der Herstellung vom β-Chinacridon dagegen muss das Natriumsalz des 6,13-Dihydrochinacridons hergestellt werden, welches Salz dann zum Chinacridon-Natriumsalz oxidiert und in situ zum β-Chinacridon hydrolysiert wird. Zur Bildung des Natriumsalz-Zwischenproduktes ist eine relativ hohe Natriumhydroxid-Konzentration, gewöhnlich über 10 % oder bis zu 29,5 % (US-Patent Nr. 2 969 366; Tabelle 1), notwendig. Wegen der hohen Konzentration der Base und der Verwendung von wässrigem Alkohol wird das rohe β-Chinacridon in breiten Partikeln mit einer spezifischen Oberfläche von 3 bis 8 m²/g und einer Partikelgrösse von über 1 µm gewonnen, welche die für eine vernünftige Opazität benötigte optimale Partikelgrösse übersteigt und zu einer äussert niedrigen Farbstärke im TiO₂-Verschnitt und zu einem dunklen und vernünftig transparenten Vollton führt.

Bei der Herstellung von substituierten Chinacridonen (z.B. 2,9-Dimethylchinacridon oder 2,9-Dichlorchinacridon) erfolgt die vollständige Oxidation der substituierten Ausgangsprodukte (6,13-Dihydrochinacridone) in wässrigem Methanol bei einer ähnlichen Base-Konzentration, bis zu 31 %, bezogen auf die Gesamtflüssigkeiten. Im Falle vom β-Chinacridon liefert dieses Oxidationsverfahren in hoch alkalischem Medium Produkte mit einer sehr breiten Partikelgrösse (spezifische Oberfläche von etwa 8 m²/g für 2,9-Dimethylchinacridon und etwa 10 m²/g für 2,9-Dichlorchinacridon), welche die minimale, für eine vernünftige Opazität erforderliche Partikelgrösse übersteigt und zu einer sehr niedrigen Farbstärke im TiO₂-Verschnitt führt.

Ein Hauptgegenstand der vorliegenden Erfindung ist demnach ein verbessertes Verfahren zur Herstellung von opaken substituierten Chinacridonen.

Es wurde nunmehr überraschenderweise gefunden, dass opake disubstituierte Chinacridonderivate pigmentärer Qualität und mit verbesserter Kristallinität durch Mahlung der rohen Ausgangschinacridone in einem Alkohol und in Gegenwart einer Base leicht hergestellt werden können.

Der vorliegende Erfindungsgegenstand betrifft demnach ein Verfahren zur Herstellung von opaken disubstituierten Chinacridonen der Formeln I und II 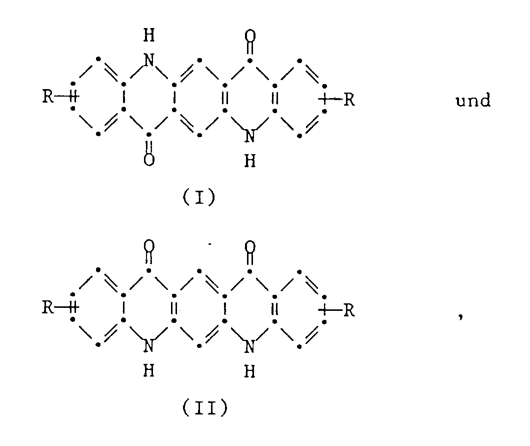
worin die Reste R unabhängig voneinander F, Cl, Br, C₁-C₃-Alkyl oder C₁-C₃-Alkoxy bedeuten, wonach das rohe oder subpigmentäre Chinacridon in Gegenwart eines Alkohols in einer Menge zwischen 5- und 25-mal das Gewicht des Chinacridons und einer Base in einer Menge zwischen 0,5 und 10%, bezogen auf den Alkohol gemahlen wird, und das resultierende opake Produkt isoliert wird.

Das erfindungsgemässe Verfahren ist anpassungsfähig. Eine beträchtliche Anzahl opaker Derivate kann hergestellt werden. Rohe, vorgemahlene oder aus sauren Lösungen ausgefallene Chinacridonpulver können als Ausgangsprodukte verwendet werden.

Besonders vorteilhaft ist, dass das erfindungsgemässe Verfahren bei Raumtemperatur oder beinahe Raumtemperatur in einem Mahlvorgang mit einer oder einer begrenzten Anzahl Verfahrensschritte durchgeführt werden kann und somit ein Partikelwachstum mit dem gewünschten Gleichgewicht bezüglich Partikelgrösse und enger Partikelgrössenverteilung erlaubt. Diese Verfahrensmerkmale stehen im klaren Gegensatz zu den oben dargestellten Verfahren des Standes der Technik, welche hohe Temperaturen und mehrere einzelne Verfahrensschritte involvieren. Ausserdem kann das Wachstum der Partikelgrösse gesteuert werden, was eine direkte Isolierung von pigmentären Produkten aus der Mahlsuspension ermöglicht. Schliesslich zeigen die resultierenden opaken Pigmente ausgezeichnete Leistungsmerkmale. Sie sind licht-, wetter- und lösungsmittelbeständig, und sie zeigen eine sehr hohe Hitzebeständigkeit, die eine Verwendung in einer Vielzahl organischer Materialien erlaubt.

Erfindungsgemäss bevorzugte Chinacridone sind disubstituierte 2,9- und 4,11-Chinacridone, disubstituierte 3,10-Chinacridone können auch eingesetzt werden, wobei die beiden Substituenten R gleich und F, Cl, Br, CH₃ oder OCH₃ sind.

Das anmeldungsgemässe Verfahren wird im allgemeinen so durchgeführt, dass das rohe, vorgemahlene oder durch Ausfällung aus einer sauren Lösung erhaltene Chinacridon, der Alkohol und die Base in einer geeigneten Mühle geladen werden. Dann werden die Mahlelemente eingetragen. Das System wird bei Raumtemperatur zwischen 20 und 40°C während z.B. etwa 24 bis 96 Stunden gemahlen, und das erhaltene opake Chinacridonderivat wird isoliert.

Beispiele geeigneter Alkohole sind tief siedende Alkanole, wie z.B. Methanol, Ethanol, Butanol und Pentanol, sowie Glykole, z.B. Ethylenglykol. Der Alkohol muss in Gegenwart der Base beständig sein. Methanol und Ethanol sind bevorzugt. Geeignete Basen sind z.B. Alkalimetallhydroxide, wie Kalium-, Natrium- und Lithiumhydroxid, sowie quaternäre Ammoniumhydroxide, wie z.B. Benzyltrimethylammoniumhydroxid. Natrium- und Kaliumhydroxid sind bevorzugt.

Ueberraschenderweise ermöglicht das vorliegende Mahlverfahren die Bildung von hoch kristallinen pigmentären opaken Chinacridonen bei Raumtemperatur, dies im Gegensatz zu den bei hohen Temperaturen durchgeführten Verfahren des Standes der Technik. Da die Endpigmentpartikel im allgemeinen schon während der Mahlstufe gebildet werden, ist eine zusätzliche Heizstufe unwesentlich.

Wie oben bereits erwähnt, können rohe Pigmente oder subpigmentäre Pulver, die z.B. durch Vormahlung des rohen Chinacridons oder durch Ausfällung des Rohchinacridons aus einer sauren Lösung erhalten werden, im anmeldungsgemässen Mahlverfahren eingesetzt werden.

Vormahlverfahren stellen an und für sich bekannte Verfahren dar, wie z.B. Mahlung ohne Flüssigkeiten, oder, falls Flüssigkeiten verwendet werden, mit einem phasenlenkenden Lösungsmittel oder mit einem oberflächenaktiven Mittel in kleinen Mengen (maximal etwa 10 Gew.-% der Pigmentmenge) oder in einer derartigen Menge, dass das Pigment die Eigenschaften eines Pulvers behält. Zweckmässig kann die Vormahlung zur Vermeidung einer möglichen Explosion des resultierenden Mahlpulvers in Gegenwart einer kleinen Menge (10 % oder weniger) eines Salzes, wie z.B. wasserfreies Natriumsulfat, durchgeführt werden. Die Vormahlung kann mit verschiedenen Mahlmitteln, z.B. Stahlkugeln, Nägeln, Stahlschrotkugeln, keramischen Kugeln oder Glasperlen, durchgeführt werden. Wird die Vormahlung mit Stahlmahlmitteln durchgeführt, so ist es nach der Mahlstufe zur Entfernung allfälligen Metallabriebes erwünscht, die Pigmentsuspension mit einer verdünnten anorganischen Säure zu behandeln.

"Acid pasting" bedeutet bekannterweise Lösen der Rohpigmente in konzentrierter Schwefelsäure und anschliessendes Ausfällen subpigmentärer Pigmentpartikel durch Wasserzugabe zur Pigmentlösung direkt oder unter Hochturbulenz.

Für das anmeldungsgemäss basische alkoholische Mahlverfahren können mehrere Mahlmittel, wie z.B. Stahlschrotkugeln oder keramische Kugeln, eingesetzt werden. Als Stahlschrotkugeln sind Stahlschrotkugeln von 3,2 mm geeignet, für die heramischen Kugeln dagegen verschiedene Grössen und Zusammensetzungen. Glasperlen von 1,6 bis 2,5 mm oder 2,5 bis 3,15 mm (aus einer kristallinen Zirkonoxid- und amorphen Siliziumoxid-Phase durch Schmelzen dieser Oxide hergestellt) sind besonders geeignet.

Zirkonoxid-Perlen enthaltend geringe Mengen Magnesiumoxid sind auch geeignet. Wie oben bereits erwähnt, ist nach der Mahlung bei Verwendung von Stahlmahlmitteln eine saure Extraktion der Pigmentsuspension erwünscht.

Die Alkohol- und Base-Konzentration sind so auszuwählen, dass die Pigmenteigenschaften optimiert werden können. Die Alkohol-Menge liegt zwischen 5- und 25-mal die Pigmentmenge, vorzugsweise aber zwischen 12- und 20-mal. Die Base-Konzentration (bevorzugt als wässrige Lösung) beträgt 0,5 bis 10 Gew.-% (Base-Gehalt), bezogen auf den Alkohol, bevorzugt aber 1,0 bis 5,0 %.

Ist die Base-Menge nicht angemessen, so sind Partikel-Veränderung und -Wachstum minimal. Bei angepasstem Base-Konzentrationsbereich ist die Bildung des Chinacridon-Kalium-, -Natrium- oder quaternären -Ammoniumsalzes, welches dank seiner spezifischen blauen Farbe leicht erkennbar ist, nicht sichtbar. Da sich während des Mahlvorganges neue Flächen bilden, wird angenommen, dass der Kristallwachstum-Mechanismus über die Bildung einer sehr kleinen Konzentration des Chinacridonsalzes erfolgt, welches Salz löslicher im Alkohol als Chinacridon selbst ist, was zum Wachstum der Partikel und nach anschliessender Alkoholyse zum Pigment führt. Ein derartiger dynamischer Reifungsprozess der Partikel kann gegebenenfalls zu einer vollständigen Formumwandlung und einem Partikelwachstum bis zum gewünschten Gleichgewicht des Partikelumfangs führen.

Falls erwünscht können in der basischen alkoholischen Mahlstufe verschiedene oberflächenaktive Mittel oder Verdünnungsmittel eingesetzt werden, vorausgesetzt, dass die Zusätze durch das basische Medium nicht inaktiviert werden. Die Zugabe von wasserunlöslichen anionischen (zur Salzbildung geeignet), kationischen oder nicht-ionischen oberflächenaktiven Mitteln dem flüssigen Mahlansatz erscheint nicht zweckmässig zu sein, da diese Mittel an der Oberfläche des Pigmentes während der Beseitigung des Alkohols absorbiert werden können, was die Pigmenteigenschaften oft verändert.

Da in der flüssigen Mahlstufe eine optimale Partikelgrösse erreicht werden kann, kann das Produkt direkt aus der Mahlsuspension nach Abtrennung der Mahlmittel isoliert werden, sofern keine saure Extraktion notwendig ist. Am besten aber wird das Pigment nach destillativer Entfernung des Alkohols isoliert. Nach Entfernung und Waschen der Mahlmittel wird die resultierende Pigmentsuspension einer Dampfdestillation unterworfen oder mit Wasser verdünnt und vom Alkohol durch Destillation (externe Heizung) befreit. Der Alkohol wird zurückgewonnen, und das Pigment wird aus der Suspension durch Filtration isoliert und mit Wasser basefrei gewaschen.

Die so erhaltenen Produkte zeigen eine ausgezeichnete Kristallinität (gemäss Röntgenbeugungsdiagramme), die im allgemeinen diejenige der nach den Verfahren des Standes der Technik erhaltenen Produkte übertrifft.

Wie bei vielen anderen Pigmenten können die erfindungsgemäss erhaltenen Produkte zur Verbesserung ihrer Leistung in Autolack- und anderen Finishing-Systemen zweckmässig einer Oberflächenbehandlung nach bekannten Methoden unterworfen werden. Flockulationsvermindernde oder -hemmende Zusätze oder die Pigmentdispersionsstabilität verbessernde Zusätze können vorteilhaft verwendet werden.

Die so behandelten Pigmente zeigen als solche oder in Mischung mit verschiedenen Systemen, wie z.B. in Auto-Ueberzugslacken, wie Acryl-, Alkyd-, Polyester- oder andere Systeme, hervorragende Eigenschaften. 2-Phthalimidomethylchinacridon, Chinacridonsulfonsäure oder andere ähnliche Derivate können als Antiflockulationsmittel eingesetzt werden. In einigen Systemen kann die Leistung derartiger Pigmente durch Zusatz von polymeren Dispergierungsmitteln noch weiter verbessert werden.

Pigmentierte Systeme, welche die erfindungsgemäss erhaltenen Pigmente einzeln, in Gemischen oder zweckmässig noch mit weiteren Komponenten enthalten können, sind z.B.: Pasten, Flush-Pasten, Präparate, Druckfarben, Leimfarben, Lacke aller Arten, wie z.B. physikalisch oder oxidativ trocknende Lacke oder Firnisse, sauer, aminisch und peroxidisch härtende Lacke, oder Polyurethan-Lacke. Die Pigmente können auch in synthetischen, halbsynthetischen oder natürlichen makromolekularen Substanzen vorliegen, wie z.B. in thermoplastischen Harzen, wie Polyvinylchlorid, Polystyrol, Polyethylen, Polyestern, Phenoplasten, Aminoplasten und Gummi. Das Pigment kann auch in Gemischen vorliegen, z.B. mit natürlichen, regenerierten oder synthetischen Fasern, wie Glas-, Silikat-, Asbest-, Zellstoff-, Acetylcellulose-, Polyacrylnitril-, Polyester-, Polyurethan- und Polyvinylchlorid-Fasern, oder mit Gemischen derartiger Stoffe, oder in Pulvern, z.B. mit organischen oder anorganischen Pigmenten.

Diese Substanzgemische, enthaltend als aktives Farbmittel die erfindungsgemässen Pigmente, können fest, elastisch, teigig, viskos, dünnflüssig oder thixotrop sein. Wässrige Pasten können z.B. durch Anrühren der Pigmente in Wasser, zweckmässig mit einem Netz- oder Dispergierungsmittel, oder durch Rühren oder Kneten der Pigmente mit einem Dispergierungsmittel in Gegenwart von Wasser und gegebenenfalls von organischen Lösungsmitteln oder Oelen erhalten werden. Derartige Pasten können z.B. zur Produktion von Flush-Pasten, Druckfarben, Leimfarben, Kunststoff-Dispersionen und Spinnlösungen verwendet werden. Die Pigmente können auch in Wasser, in organische Lösungsmittel, nicht trocknende Oele, trocknende Oele, Lacke, Anstrichstoffe, Kunststoffe oder Gummi durch Einrühren, Walzen, Kneten oder Mahlen eingearbeitet werden. Schliesslich ist zur Herstellung von Substanzgemischen auch möglich, die Pigmente durch Trockenmischen mit organischen oder anorganischen Massen, Granulaten, Fasermaterialien, Pulvern oder anderen Pigmenten zu verarbeiten.

Neben ihrer hohen Kristallinität, ihren guten allgemeinen Beständigkeiten, wie Licht- und Weterbeständigkeit, und ihrer Lösungsmittel- und Weichmacher-Beständigkeiten zeichnen sich die erfindungsgemäss erhaltenen Pigmente auch durch eine verbesserte Hitzbeständigkeit aus. So können sie in HD- und LD-Polyethylen oder Polypropylen eingearbeitet werden, ohne dass ihr Farbton bei der Verarbeitungstemperatur trüb wird.

In den folgenden Beispielen bedeuten Teile, sofern nicht anders angegeben, Gewichtsteile.

### Beispiel 1: Herstellung einem opaken 2,9-Dimethylchinacridons mit breiter Partikelgrösse direkt aus einem rohen Ausgangsprodukt.

Eine Mühle (236 ml) wird mit 300 g keramischer Perlen (Durchmesser zwischen 1,6 und 2,5 mm; bestehend aus etwa 69 % ZrO₂ und 31 % SiO₂), 6 g rohem 2,9-Dimethylchinacridon, 79 g Methanol und 7,5 g 44%igem wässrigem Kaliumhydroxid beladen. Die Mühle wird während 72 Stunden bei etwa 30°C und etwa 74 % ihrer kritischen Geschwindigkeit gerührt. Die Pigmentsuspension wird dann von den Perlen abgetrennt, und die Perlen werden mit Methanol gewaschen. Die erhaltenen Suspensionen werden vereinigt, und das Gemisch wird einer Wasserdampfdestillation unterworfen, bis die Temperatur der wässrigen Pigmentsuspension 95°C beträgt. Man hält diese Temperatur während 10 Minuten, isoliert das Pigment durch Filtration, wäscht es basenfrei mit Wasser und trocknet es. Nach Trocknung bei 80°C erhält man 5,6 g eines Pigmentes, das, in eine lithographische Lackanreibung eingearbeitet, heller und opaker im Vollton ist als ein kommerzielles 2,9-Dimethylchinacridon. Die spezifische Oberfläche des Pigmentes gemäss Beispiel 1 beträgt 41,4 m²/g. Ein praktisch gleiches Pigment (Lackanreibung, Röntgendiagramme und spezifische Oberfläche) kann auch ohne Zwischendestillation durch Abtrennung der Pigmentsuspension aus dem Mahlansatz und anschliessende Isolierung der Pigmentsuspension, Waschen des erhaltenen Produktes und Trocknen erhalten werden. Die Destillationsstufe ist somit nicht wesentlich, und alle Verfahrensschritte können bei Raumtemperatur durchgeführt werden.

### Beispiel 2: Herstellung eines einphasigen, relativ opaken 2,9-Dimethylchinacridons.

Eine Labormühle wird mit 1500 g Stahlkugeln (Durchmesser 1,27 cm), 1500 g Dachpappenstiften, 50 g rohem 2,9 Dimethylchinacridon und 5 g wasserfreiem Natriumsulfat beladen. Die Mühle wird bei etwa 75 % ihrer kritischen Geschwindigkeit während 48 Stunden gerührt.

Die Kugeln und Stiften werden mittels eines Siebes abgetrennt, und das trockene Mahlpulver wird zurückgewonnen. Danach werden 50 g dieses Mahlpulvers in eine 2,84 Liter-Labormühle (enthaltend 2500 g keramischer Perlen vom 1,6 bis 2,5 mm Durchmesser, 791 g Methanol und 75 g 50%iges wässriges Natriumhydroxid) eingetragen; die Mühle wird bei 30°C und etwa 74 % ihrer kritischen Geschwindigkeit während 72 Stunden gerührt. Die Mühle wird über ein Sieb, das die Perlen zurückhält, ausgeladen, worauf die Perlen mit 632 g Methanol noch gewaschen werden. Die erhaltene Pigmentsuspension wird einer Wasserdampf-Destillation unterworfen (mittels eines 4-Hals-Kolbens mit Rührer, Thermometer, Dean-Stark-Rohr und Kühlrohr), wobei Methanol und etwas Wasser abdestilliert werden, bis die Temperatur der Suspension 95°C beträgt. Man kühlt dann die Suspension auf 80°C, säuert mit 20%iger Schwefelsäure bis pH 1,5 an, heizt auf etwa 95°C während einer Stunde, isoliert das erhaltene Produkt durch Filtration und wäscht es säurefrei mit heissem Wasser. Nach Trocknen bei 80°C erhält man 41 g 2,9-Dimethylchinacridon mit einem gleichen Röntgenbeugungsdiagramm wie im US-Patent Nr. 3 264 298 beschrieben (gelbliche Form; Beispiel 3). Die spezifische Oberfläche des Produktes beträgt 42,4 m²/g.

Die färberischen Eigenschaften werden in lithographischen Lackanreibungen mit einem "Hoover Müller"-Prüfgerät geprüft, wobei das Gerät mit einem Motor (1/2 Pferdestärke, 110-22 Volt bei 60 Motortakten) und zwei Glasplatten ausgestattet ist. Das Gerät kann auch so eingestellt werden, dass es nach 25, 50, 70 und 100 Umdrehungen abgestellt werden kann, wobei 50 Umdrehungen als normal betrachtet werden.

Man verwendet 3 Belastungen, welche 150 Pfund Druck (= 680 kg) zwischen den Glasplatten erzeugen. In jedem Fall werden 0,6 g des trockenen Pigmentes und 1,2 g eines lithographischen Lacktrockenstoffes mittels eines Spatels auf der unteren Glasplatte aufgetragen. Die obere Glasplatte wird mit der unteren Platte verbunden, und der Motor wird eingestellt und nach 50 Umdrehungen abgestellt. Die Platten werden getrennt, die Dispersionsfarbe wird eingesammelt und wieder auf der unteren Platte verteilt, und der Vorgang wird 6-mal wiederholt. Die resultierende Dispersionsfarbe (= Vollton) wird neben einem geeigneten Standardmuster (nach dem gleichen Verfahren vorbereitet) ausgezogen. Zur Farbstärke-Prüfung der Muster werden berechnete Mengen der Vollton-Farbe (0,18 g) und einer Zinkoxid-Dispersionsfarbe (10 g) genau abgewogen und mittels eines Spatels auf einer polierten Glasplatte gemischt. Die resultierenden Verschnitte werden dann neben einem geeigneten Standardmuster (nach dem gleichen Verfahren hergestellt) ausgezogen, wobei die beiden Vollton- und Verschnitt-Ausfärbungen nass und trocken (nach Trocknung bei Raumtemperatur während mehrerer Tage) visuell verglichen werden.

Das Pigment gemäss Beispiel 2 zeigt in der geprüften lithographischen Lackfarbe einen relativ hellen opaken Vollton.

### Beispiel 3: Herstellung von pigmentärem 2,9-Dimethylchinacridon durch Ausfällung und anschliessende Mahlung in basischem Alkohol.

10 g rohes 2,9 Dimethylchinacridon werden in 100 g konzentrierter Schwefelsäure gelöst. Diese Lösung wird in 1000 g Eis-Wasser langsam eingegossen, und das erhaltene Gemisch wird während 30 Minuten bei einer maximalen Temperatur von 3°C gerührt. Das erhaltene Pigment wird abfiltriert, mit Wasser säurefrei gewaschen und bei 80°C getrocknet. Man erhält 9,5 g eines Produktes sehr niedriger Kristallinität (Röntgenbeugungsdiagramme), welches in einer Lackanreibung als höchst aggregiertes Produkt einen dunklen Vollton und einen sehr farbschwachen Verschnitt zeigt.

6 g des wie oben aufgefällten Produktes werden bei etwa 30°C in einer Labormühle (236 ml; gefüllt mit 300 g keramischer Perlen, 79 g Methanol und 5,4 g 50%igem wässrigem Natriumhydroxid) während 72 Stunden gemahlen. Die Pigmentsuspension wird von den Perlen abgetrennt, und die Perlen werden mit Methanol gewaschen. Beide Suspensionen werden vereinigt, die erhaltene Suspension wird während 30 Minuten am Rückfluss erhitzt und dann einer Wasserdampf-Destillation unterworfen, bis die Temperatur der Suspension 95°C beträgt. Diese Temperatur wird während etwa 10 Minuten gehalten. Nach Isolierung des Pigmentes durch Filtration, säurefreiem Waschen mit Wasser und Trocknen erhält man 5,7 g Pigment mit einer spezifischen Oberfläche von 41,9 m²/g. Sein Röntgenbeugungsdiagramm und seine Eigenschaften in einer Lackanreibung sind dem nach obigem Beispiel 2 erhaltenen Produkt sehr ähnlich.

### Beispiel 4: Herstellung eines relativ opaken 2,9-Dichlorchinacridons direkt aus einem rohen Ausgangsmaterial.

50 g rohes 2,9-Dichlorchinacridon werden in eine 2,84 Liter-Labormühle enthaltend 2500 g keramischer Perlen (vgl. Bsp. 1), 791 g Methanol und 75 g 50%iges wässriges Natriumhydroxid eingetragen. Die Mühle wird bei etwa 30°C und etwa 74 % ihrer kritischen Geschwindigkeit während 72 Stunden betrieben. Die erhaltene Pigmentsuspension wird dann von den Perlen getrennt und in einem 4-Hals-Kolben (wie Bsp. 2) einer Wasserdampfdestillation unterworfen, bis die Temperatur der Suspension 95°C beträgt. Die Suspension wird auf 80°C gekühlt, und das Produkt wird durch Filtration isoliert, mit heissem Wasser basefrei gewaschen und bei 80°C getrocknet. Man erhält 46 g eines relativ opaken Pigmentes mit einer spezifischen Oberfläche von 40,7 m²/g. Das Röntgenbeugungsdiagramm ist dem entsprechenden Diagramm gemäss US-Patent Nr. 3 157 659 (γ-Modifikation des 2,9-Dichlorchinacridons) sehr ähnlich und entspricht einem Produkt hohen Kristallinitätsgrades.

Zusammenfassend ermöglicht das anmeldungsgemässe Verfahren die Herstellung von relativ opaken Chinacridonderivaten, wobei Variationen in den Grössen, Verfahren und Materialien innerhalb des Umfangs der Anmeldung auch zur vorliegenden Erfindung gehören.

## Patentansprüche

1. Verfahren zur Herstellung von opaken disubstituierten Chinacridonen der Formeln I und II 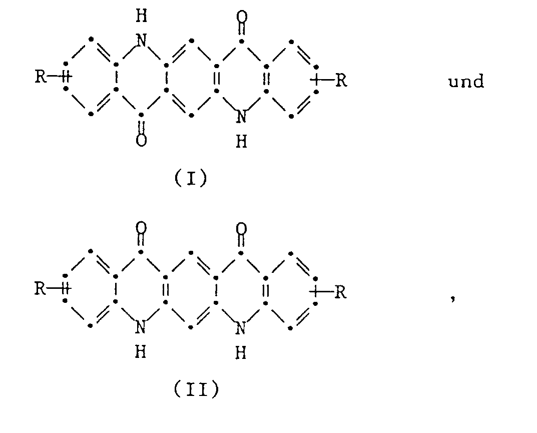 worin die Reste R unabhängig voneinander F, Cl, Br, C₁-C₃-Alkyl oder C₁-C₃-Alkoxy bedeuten, wonach das rohe oder subpigmentäre Chinacridon gemäss obigen Formeln in Gegenwart eines Alkohols in einer Menge zwischen 5- und 25-mal das Gewicht des Chinacridons und einer Base in einer Menge zwischen 0,5 und 10%, bezogen auf den Alkohol, gemahlen wird, und das resultuerende opake Produkt isloiert wird.

2. Verfahren gemäss Anspruch 1, worin das Chinacridon ein disubstituiertes 2,9- oder 4,11-Chinacridon ist, und die beiden Substituenten R gleich und F, Cl, Br, CH₃ oder OCH₃ sind.

3. Verfahren gemäss Anspruch 2, worin das Chinacridon 2,9-Dichlorchinacridon ist.

4. Verfahren gemäss Anspruch 2, worin das Chinacridon 2,9-Dimethylchinacridon ist.

5. Verfahren gemäss Anspruch 2, worin das Chinacridon 4,11-Dichlorchinacridon ist.

6. Verfahren gemäss Anspruch 1, worin der Alkohol tiefsiedend und ein Alkanol oder ein Glykol ist.

7. Verfahren gemäss Anspruch 6, worin der Alkohol Methanol, Ethanol, Butanol oder Ethylenglykol ist.

8. Verfahren gemäss Anspruch 7, worin der Alkohol Methanol ist.

9. Verfahren gemäss Anspruch 1, worin die Base ein Metallalkalihydroxid oder ein quaternäres Ammoniumhydroxid ist.

10. Verfahren gemäss Anspruch 9, worin die Base Kalium- oder Natriumhydroxid ist.

11. Verfahren gemäss Anspruch 1, worin der Alkohol Methanol und die Base Kalium- oder Natriumhydroxid sind.

12. Verfahren gemäss Anspruch 1, wonach das subpigmentäre Chinacridon aus einer Trockenmahlung oder einer sauren Ausfällung des Rohchinacridons resultiert.

## Claims

1. A process for the preparation of opaque disubstituted quinacridones of the formulae I and II 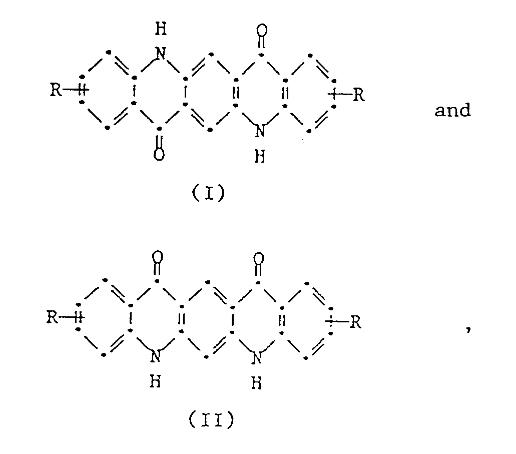 in which the radicals R are independently of one another F, Cl, Br, C₁-C₃alkyl or C₁-C₃alkoxy, which comprises milling the crude or subpigmentary quinacridone according to the above formulae in the presence of an alcohol in an amount ranging from 5 to 25 times the weight of quinacridone and a base in an amount ranging from 0.5 to 10 %, based on the alcohol, and isolating the resulting opaque compound.

2. A process according to claim 1, wherein the quinacridone is a 2,9- or 4,11- disubstituted quinacridone, and both substituents R are the same and are F, Cl, Br, CH₃ or OCH₃.

3. A process according to claim 2, wherein the quinacridone is 2,9-dichloroquinacridone.

4. A process according to claim 2, wherein the quinacridone is 2,9-dimethylquinacridone.

5. A process according to claim 2, wherein the quinacridone is 4,11-dichloroquinacridone.

6. A process according to claim 1, wherein the alcohol is low boiling and is an alkanol or a glycol.

7. A process according to claim 6, wherein the alcohol is methanol, ethanol, butanol or ethylene glycol.

8. A process according to claim 7, wherein the alcohol is methanol.

9. A process according to claim 1, wherein the base is an alkali metal hydroxide or a quaternary ammonium hydroxide.

10. A process according to claim 9, wherein the base is potassium hydroxide or sodium hydroxide.

11. A process according to claim 1, wherein the alcohol is methanol and the base is potassium hydroxide or sodium hydroxide.

12. A process according to claim 1, wherein the subpigmentary quinacridone results from a dry milling or an acid precipitation of the crude quinacridone.

## Revendications

1. Procédé de préparation de quinacridones disubstituées opaques de formules I et II 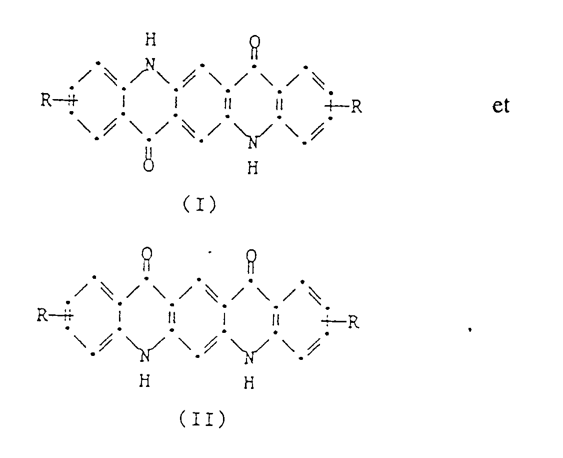 dans lesquelles les restes R représentent indépendamment les uns des autres F, Cl, Br, un alkyle en C₁-C₃ ou un alcoxy en C₁-C₃, selon lequel on broie la quinacridone brute ou subpigmentaire ayant l'une des formules ci-dessus en présence d'un alcool en une quantité comprise entre 5 et 25 fois la masse de la quinacridone, et d'une base en une quantité comprise entre 0,5 et 10 % par rapport à l'alcool, et on isole le produit opaque formé.

2. Procédé selon la revendication 1, dans lequel la quinacridone est une quinacridone disubstituée en 2,9 ou 4,11, et les deux substituants R sont identiques et sont F, Cl, Br, CH₃ ou OCH₃.

3. Procédé selon la revendication 2, dans lequel la quinacridone est la 2,9-dichloroquinacridone.

4. Procédé selon la revendication 2, dans lequel la quinacridone est la 2,9-dichloroquinacridone.

5. Procédé selon la revendication 2, dans lequel la quinacridone est la 4,11-dichloroquinacridone.

6. Procédé selon la revendication 1, dans lequel l'alcool a un point d'ébullition bas et est un alcanol ou un glycol.

7. Procédé selon la revendication 6, dans lequel l'alcool est le méthanol, l'éthanol, le butanol ou l'éthylèneglycol.

8. Procédé selon la revendication 7, dans lequel l'alcool est le méthanol.

9. Procédé selon la revendication 1, dans lequel la base est un hydroxyde de métal alcalin ou un hydroxyde d'ammonium quaternaire.

10. Procédé selon la revendication 9, dans lequel la base est l'hydroxyde de potassium ou de sodium.

11. Procédé selon la revendication 1, dans lequel l'alcool est le méthanol et la base est l'hydroxyde de potassium ou de sodium.

12. Procédé selon la revendication 1, dans lequel la quinacridone subpigmentaire est obtenue par un broyage à sec ou par précipitation en milieu acide de la quinacridone brute.
